# EUROPÄISCHE PATENTSCHRIFT

(11) **EP 3 882 008 B1**
(45) Veröffentlichungstag und Bekanntmachung des Hinweises auf die Patenterteilung: **18.05.2022**
(21) Anmeldenummer: 20164055.4
(22) Anmeldetag: 18.03.2020
(51) Int. Cl.: B29C 65/18, B65B 9/04, B65B 51/16, B29C 65/78

(54) **SIEGELVORRICHTUNG UND -VERFAHREN**
SEALING DEVICE AND METHOD
DISPOSITIF ET PROCÉDÉ DE SCELLAGE

(43) Veröffentlichungstag der Anmeldung: 22.09.2021
(73) Patentinhaber: Uhlmann Pac-Systeme GmbH & Co. KG, 88471 Laupheim (DE)
(72) Erfinder: Schlumberger, Albert, 88480 Achstetten-Bronnen (DE)
(74) Vertreter: Wächter, Jochen

(56) Entgegenhaltungen:
- EP-B1- 2 184 158
- DE-A1-102004 062 520

## Beschreibung

Die vorliegende Erfindung betrifft eine Siegelvorrichtung sowie ein Verfahren zum Siegeln einer Deckfolie an eine Formfolie.

Derartige Siegelvorrichtungen werden zum Beispiel verwendet, um zur Herstellung von Blisterpackungen für pharmazeutische Produkte eine Deckfolie an eine Formfolie zu siegeln, die eine Vielzahl von Blisternäpfen darin aufweist, nachdem diese Blisternäpfe mit entsprechenden Produkten befüllt wurden. Beim sogenannten Walzensiegeln werden die Formfolie und die Deckfolie hierzu zwischen einer Siegelwalze und einer Gegenwalze hindurch geführt. Dabei ist die Siegelwalze beheizt und die Siegelwalze und die Gegenwalze üben einen Druck auf die Formfolie und die Deckfolie aus, wodurch die Folien aneinander gesiegelt werden. Sowohl die im Wesentlichen zylindrische Siegelwalze als auch die im Wesentlichen zylindrische Gegenwalze stehen dabei in einem im Wesentlichen linienförmigen Kontakt mit der jeweils an sie angrenzenden Folie. Diese Kontaktlinie wird auch als Siegellinie bezeichnet.

In Bereichen der Formfolie, in denen über die gesamte Breite der Formfolie kein Blisternapf entlang der Siegellinie ausgebildet ist, erstreckt sich eine effektive Siegellinie, entlang derer tatsächlich ein Druck ausgeübt wird, über die gesamte Breite der Siegellinie und die von den Walzen ausgeübte Kraft wird über die gesamte Breite der Siegellinie bzw. der Walzen verteilt auf die Folien aufgebracht. In Bereichen der Formfolie, in denen entlang der Siegellinie jedoch ein oder mehrere Blisternäpfe ausgebildet sind, ist die Siegellinie im Bereich der Blisternäpfe unterbrochen und die effektive Siegellinie ist um die Summe dieser Unterbrechungen kürzer. Folglich wird die von den Walzen auf die Folien ausgeübte Kraft auf eine kleinere Fläche aufgebracht, wodurch der Druck auf die Folien erhöht wird.

Ist der Druck entlang einer kürzeren effektiven Siegellinie im Bereich der Blisternäpfe zu hoch, kann es zu Durchstichen in der Deckfolie kommen. Insbesondere auf dem pharmazeutischen Gebiet sind solche Beschädigungen des Folienmaterials und der daraus hergestellten Blisterpackungen nicht akzeptabel. Wird der von den Walzen auf die Folien ausgeübte Druck jedoch zur Vermeidung von Durchstichen verringert, kann es passieren, dass der Druck im Bereich langer effektiver Siegellinien nicht ausreicht, um ein vollständiges und fehlerfreies Siegeln der Deckfolie an die Formfolie zu gewährleisten.

Die EP 2 184 158 B1 schlägt daher vor, die Oberfläche der Gegenwalze in unterschiedlich große Kontaktflächen zu unterteilen. Die Kontaktflächen sind in einem Mantelflächenlängsbereich der Gegenwalze am größten, in dem die Oberfläche der Gegenwalze durch Ausnehmungen zur Aufnahme der Blisternäpfe am stärksten reduziert ist, und sind in einem Mantelflächenlängsbereich am kleinsten, in dem die Oberfläche der Gegenwalze nicht durch Ausnehmungen unterbrochen ist. Dadurch wird im Idealfall ein konstanter Druck auf die Folien bzw. eine konstante Flächenpressung erzeugt. Die Herstellkosten derartiger Gegenwalzen sind jedoch sehr hoch.

Die DE 10 2004 062 520 A1 beschreibt eine alternative Möglichkeit zur Regulierung des Anpressdrucks, bei der in Abhängigkeit von der Folienposition eine vorbestimmte Kraft auf die Vorschubwalze ausgeübt wird. In Bereichen der Blisternäpfe wird eine geringere Kraft auf die Vorschubwalze ausgeübt, wodurch der Druck auf die Folien verringert wird, während in Bereichen ohne Blisternäpfe eine größere Kraft auf die Vorschubwalze ausgeübt wird, um den Druck auf die Folien zu erhöhen. Die Kraft wird dabei durch einen Stellantrieb auf die Vorschubwalze ausgeübt. Ein maximaler Lastwechsel und somit eine maximale Fördergeschwindigkeit der Folien und die Produktivität der Siegelvorrichtung werden daher durch den Stelleantrieb begrenzt und es ist eine aufwändige Steuerung erforderlich.

Es ist eine Aufgabe der vorliegenden Erfindung, eine Siegelvorrichtung und ein Siegelverfahren bereitzustellen, die besonders einfach ein zuverlässiges und möglichst fehlerfreies Siegeln einer Deckfolie an eine Formfolie ermöglichen.

Diese Aufgabe wird durch die Gegenstände der unabhängigen Ansprüche 1 bzw. 13 gelöst. Vorteilhafte Ausführungsformen sind Gegenstand der Unteransprüche.

Eine erfindungsgemäße Siegelvorrichtung zum Siegeln einer Deckfolie an eine Formfolie, die eine Vielzahl von Blisternäpfen aufweist, umfasst eine Siegelwalze und eine Gegenwalze. Die Siegelwalze ist um eine Siegelwalzenachse drehbar gelagert und hat eine Mantelfläche, die mindestens einen umlaufenden ersten Mantelflächenabschnitt aufweist. Die Gegenwalze ist um eine Gegenwalzenachse drehbar gelagert und hat eine Mantelfläche, die mindestens einen umlaufenden ersten Mantelflächenabschnitt aufweist, in dem Ausnehmungen zur Aufnahme der Blisternäpfe der Formfolie ausgebildet sind. Die Gegenwalzenachse ist parallel zur Siegelwalzenachse angeordnet, sodass zwischen der Gegenwalze und der Siegelwalze ein Spalt gebildet ist, durch den die Formfolie und die Deckfolie in Kontakt miteinander hindurchführbar sind. Zumindest eine aus Siegelwalze und Gegenwalze ist in radialer Richtung relativ zur anderen aus Siegelwalze und Gegenwalze verschiebbar gelagert, sodass ein Abstand zwischen der Siegelwalzenachse und der Gegenwalzenachse variabel ist. Zumindest eine aus Siegelwalze und Gegenwalze weist auf ihrer Mantelfläche eine erste Erhebungsgruppe mit einer Mehrzahl von in Umfangsrichtung zueinander beabstandeten Erhebungen auf, die gegenüber dem ersten Mantelflächenabschnitt der jeweiligen Walze erhöht sind. Die erste Erhebungsgruppe ist in einem umlaufenden zweiten Mantelflächenabschnitt der jeweiligen Walze angeordnet, der in axialer Richtung neben dem ersten Mantelflächenabschnitt der jeweiligen Walze angeordnet ist. Der Abstand zwischen der Siegelwalzenachse und der Gegenwalzenachse entspricht einem ersten Abstand, wenn keine Erhebung im Bereich des Spalts angeordnet ist, und entspricht einem zweiten Abstand, der größer als der erste Abstand ist, wenn eine Erhebung im Bereich des Spalts angeordnet ist.

Auf diese Art und Weise sind die Siegelwalze und die Gegenwalze möglichst einfach ausgebildet, da lediglich die Erhebungen der ersten Erhebungsgruppe in einem zweiten Mantelflächenabschnitt vorzusehen sind, die ohne großen Aufwand während der Herstellung der Gegenwalze bzw. der Siegelwalze erzeugt werden können. Die Erhebungen ermöglichen im Wesentlichen unabhängig von der Drehgeschwindigkeit der Walzen ein zuverlässiges und exakt definiertes Ändern des Abstands der Walzen zwischen dem ersten und dem zweiten Abstand, wodurch der Druck auf die Folien im ersten Mantelflächenbereich reduziert wird. Durchstiche in der Deckfolie können dadurch einfach vermieden werden. Ist keine Erhebung im Bereich des Spalts angeordnet, stellen sich die Walzen zurück in den ersten Abstand, wodurch die auf die Folien im ersten Mantelflächenbereich wirkende Kraft wieder erhöht wird und ein zuverlässiges Siegeln der Deckfolie an die Formfolie erreicht wird.

Auch bei hohen Fördergeschwindigkeiten, die z.B. Lastwechsel im Abstand von etwa 40 ms erfordern können, wird durch die erfindungsgemäße Siegelvorrichtung eine präzise Veränderung des Anpressdrucks auf die Deckfolie und die Formfolie ermöglicht.

Wir im Folgenden auf die "jeweilige Walze" Bezug genommen, ist damit die Walze aus Siegelwalze und Gegenwalze gemeint, die die Erhebungen aufweist, sofern sich aus dem Kontext nichts anderes ergibt.

Besonders bevorzugt weist die Gegenwalze die Erhebungen auf, da die Gegenwalze aufgrund der Ausnehmungen ohnehin formatabhängig ist, während die Siegelwalze in der Regel formatunabhängig ist. Es kann aber auch die Siegelwalze die Erhebungen aufweisen, weshalb bevorzugte Ausführungsformen nachfolgend allgemeingültig beschrieben sind.

Da die Erhebungen der ersten Erhebungsgruppe im zweiten Mantelflächenabschnitt und somit neben dem ersten Mantelflächenabschnitt mit den Ausnehmungen für die Blisternäpfe angeordnet sind, wirken sie sich nicht negativ auf den Siegelbereich der Formfolie und der Deckfolie um die Blisternäpfe und somit vorzugsweise nicht auf den Bereich der zu erzeugenden Blisterpackungen aus.

Jede Erhebung der ersten Erhebungsgruppe ist dazu eingerichtet, bei Kontakt mit einer ihr zugewandten Oberfläche der Deckfolie bzw. der Formfolie die jeweilige Walze zu verschieben, sodass die Siegelwalzenachse und die Gegenwalzenachse im zweiten Abstand zueinander angeordnet sind. Dadurch verringert sich der im Spalt von der Siegelwalze und der Gegenwalze entlang der Siegellinie auf die Folien ausgeübte Druck. Die Erhebungen sind hierzu gegenüber dem mindestens einen ersten Mantelflächenabschnitt der Siegelwalze bzw. der Gegenwalze erhöht. Der mindestens eine erste Mantelflächenabschnitt definiert eine Wirkfläche der Siegelwalze bzw. der Gegenwalze, die die ihr zugewandte Oberfläche der Deckfolie bzw. der Formfolie flächig kontaktiert. Der jeweilige erste Mantelflächenabschnitt als Wirkfläche bildet also die Kontaktfläche der jeweiligen Walze zur Deckfolie bzw. zur Formfolie zum Siegeln. Andere Erhebungen oder Profilierungen auf der Mantelfläche der Siegelwalze oder der Gegenwalze, zum Beispiel zum Einprägen von Kennzeichnungen in die Folien oder zum Erhöhen des Drucks in bestimmten Bereichen der Folien, fallen somit nicht unter die hierin beschriebenen Erhebungen und sind insbesondere nicht zum Erhöhen des Abstands zwischen der Siegelwalzenachse und der Gegenwalzenachse geeignet.

Die Siegelwalzenachse und die Gegenwalzenachse sind parallel zueinander angeordnet. Der Abstand zwischen der Siegelwalzenachse und der Gegenwalzenachse ist in der Ebene, in der die beiden Achsen liegen, senkrecht zur Siegelwalzenachse und zur Gegenwalzenachse und somit in radialer Richtung der Siegelwalze und der Gegenwalze definiert.

Die verschiebbare Walze aus Siegelwalze und Gegenwalze ist entlang einer Verbindungsachse verschiebbar gelagert, die sich in der Ebene, in der die beiden Achsen liegen, senkrecht zur Siegelwalzenachse und zur Gegenwalzenachse erstreckt.

Aufgrund der geringen notwendigen Verschiebung der Walzen zwischen dem ersten Abstand und dem zweiten Abstand, kann die Lagerung der zumindest einen Walze auch weniger steif und mit einer gewissen Flexibilität ausgebildet sein, sodass die Lagerung eine geringe Verschiebung der Walzen relativ zueinander erlaubt und die Walzen zugleich in den ersten Abstand vorspannt.

Bevorzugt ist die Siegelwalze verschiebbar gelagert und die Gegenwalze ist ortsfest und lediglich drehbar gelagert. Dies kann z.B. dadurch erreicht werden, dass die Siegelwalze mittels eines Stellantriebs, beispielsweise eines Pneumatikzylinders, anschwenkbar ist, um einen Siegeldruck einzustellen. Zugleich kann eine derartige Lagerung der Siegelwalze eine Verschiebung der Siegelwalze aufnehmen.

Im Bereich des Spalts zwischen der Siegelwalze und der Gegenwalze stehen diese in einem im Wesentlichen linienförmigen Kontakt mit der ihnen jeweils zugewandten Oberfläche der Deck- bzw. Formfolie. Die Siegelwalze kontaktiert die Deckfolie und die Gegenwalze kontaktiert die Formfolie. Der im Wesentlichen linienförmige Kontakt wird als Siegellinie bezeichnet und liegt vorzugsweise auf einer Geraden, in der die Ebene der Siegelwalzenachse und der Gegenwalzenachse die jeweilige Oberfläche der Deck- bzw. Formfolie schneidet. Aufgrund des Anpressdrucks der Siegelwalze und der Gegenwalze auf die Folien weicht der Kontaktbereich oft von einer reinen Linienform ab und bildet vielmehr einen Streifen geringer Breite in Fördererrichtung der Folien bzw. in Umfangsrichtung der Walzen. Ist hierin von "im Bereich des Spalts" die Rede, bezieht sich dies auf den im Wesentlichen linien- oder streifenförmigen Kontaktbereich zwischen den Walzen und den Folien im Spalt.

Dass der zweite Mantelflächenabschnitt "neben" dem ersten Mantelflächenabschnitt angeordnet ist, bedeutet nicht, dass diese unmittelbar aneinander angrenzen müssen. Vielmehr kann auch ein weiterer Mantelflächenabschnitt zwischen dem ersten und dem zweiten Mantelflächenabschnitt angeordnet sein. Allerdings überschneiden sich der erste Mantelflächenabschnitt und der zweite Mantelflächenabschnitt nicht.

Alle Ausnehmungen zur Aufnahme von Blisternäpfen, die in der Gegenwalze ausgebildet sind, sind im mindestens einen umlaufenden ersten Mantelflächenabschnitt angeordnet. Der zumindest einen ersten Mantelflächenabschnitt wirkt mit einem in Förderrichtung verlaufenden Streifen der Formfolie zusammen, aus dem Blisterpackungen aus der Formfolie auszustanzen sind. Sollen aus der Formfolie mehrere Blisterpackungen quer zur Förderrichtung nebeneinander ausgestanzt werden, weist die Gegenwalze eine entsprechende Anzahl von ersten Mantelflächenabschnitt auf, die in axialer Richtung nebeneinander angeordnet sind.

Im zweiten Mantelflächenabschnitt sind keine Ausnehmungen zur Aufnahme von Blisternäpfen der Formfolie ausgebildet. Der zweite Mantelflächenabschnitt wirkt vorzugsweise mit einem in Förderrichtung der Folien verlaufenden Streifen der Formfolie zusammen, aus dem keine Blisterpackungen gebildet werden, sondern der nach dem Ausstanzen der Blisterpackungen als Ausschuss bzw. Abfall zurückbleibt. Dadurch wird erreicht, dass die Erhebungen der ersten Erhebungsgruppe nur auf Bereiche der Formfolie einwirken, aus denen keine Blisterpackungen entstehen. Es werden folglich keine Druckmarken auf dem Endprodukt gebildet.

Ein zweiter Mantelflächenabschnitt kann zum Beispiel in einem Randbereich der Gegenwalze und somit in einem Randbereich der Formfolie oder zwischen zwei in axialer Richtung nebeneinander angeordneten ersten Mantelflächenabschnitten gebildet sein. Folglich kann die Mantelfläche der Gegenwalze auch eine Mehrzahl von zweiten Mantelflächenabschnitten aufweisen.

Es ist bevorzugt, dass sich der erste Mantelflächenabschnitt der Siegelwalze im Bereich des Spalts im Wesentlichen mit dem ersten Mantelflächenabschnitt der Gegenwalze deckt, und dass sich ein zweiter Mantelflächenabschnitt der Siegelwalze im Bereich des Spalts im Wesentlichen mit dem zweiten Mantelflächenabschnitt der Gegenwalze deckt. Dadurch ist auch auf der Siegelwalze der erste Mantelflächenabschnitt derart definiert, dass er Bereiche der Deckfolie kontaktiert, aus denen Blisterpackungen gebildet werden. Entsprechend kontaktiert der zweite Mantelflächenabschnitt der Siegelwalze vorzugsweise Bereiche der Deckfolie, aus denen keine Blisterpackungen gebildet werden, sondern die als Abfall zurückbleiben. Der erste Mantelflächenabschnitt der Siegelwalze und der erste Mantelflächenabschnitt der Gegenwalze wirken somit zusammen, um die Deckfolie im Bereich der zu erzeugenden Blisterpackungen an die Formfolie zu siegeln.

Dass sich der erste Mantelflächenabschnitt der Siegelwalze und der erste Mantelflächenabschnitt der Gegenwalze bzw. der zweite Mantelflächenabschnitt der Siegelwalze und der zweite Mantelflächenabschnitt der Gegenwalze im Bereich des Spalts decken, bedeutet, dass sie im Bereich des Spalts und insbesondere im Bereich der Siegellinie einander zugewandt sind und im Wesentlichen miteinander fluchten, also im Wesentlichen in axialer Richtung dieselbe Breite aufweisen.

Vorzugsweise sind die Erhebungen der ersten Erhebungsgruppe in Umfangsrichtung zueinander ausgerichtet und bilden eine erste Reihe von in Umfangsrichtung hintereinander angeordneten Erhebungen. Dadurch beanspruchen die Erhebungen der ersten Erhebungsgruppe in axialer Richtung der jeweiligen Walze nur einen geringen Bereich der Mantelfläche derselben und sind möglichst platzsparend angeordnet.

Insbesondere bildet der zweite Mantelflächenabschnitt, in dem die erste Erhebungsgruppe angeordnet ist, dann einen schmalen Streifen der Mantelfläche der jeweiligen Walze, der diese in Umfangsrichtung um umgibt. Es versteht sich, dass die Erhebungen der ersten Erhebungsgruppe nicht zwangsläufig in Umfangsrichtung zueinander ausgerichtet sein müssen, sondern beispielsweise auch in axialer Richtung einen Versatz zueinander aufweisen können. Auch dann sind die Erhebungen der ersten Erhebungsgruppe aber auf einer Seite eines ersten Mantelflächenabschnitts und in einem umlaufenden, streifenförmigen zweiten Mantelflächenabschnitt angeordnet.

In einer bevorzugten Ausführungsform weist die zumindest eine aus Siegelwalze und Gegenwalze, die die erste Erhebungsgruppe aufweist, auf ihrer Mantelfläche weiterhin eine zweite Erhebungsgruppe mit einer Mehrzahl von in Umfangsrichtung zueinander beabstandeten Erhebungen auf, die gegenüber dem ersten Mantelflächenabschnitt der jeweiligen Walze erhöht sind. Die zweite Erhebungsgruppe ist in einem weiteren umlaufenden zweiten Mantelflächenabschnitt der jeweiligen Walze derart angeordnet, dass der erste Mantelflächenabschnitt in axialer Richtung zwischen dem zweiten Mantelflächenabschnitt der ersten Erhebungsgruppe und dem zweiten Mantelflächenabschnitt der zweiten Erhebungsgruppe angeordnet ist. Die Erhebungen der zweiten Erhebungsgruppe sind vorzugsweise entsprechend den Erhebungen der ersten Erhebungsgruppe ausgebildet, insbesondere hinsichtlich ihrer Form und Dimensionen. Im Übrigen kann der zweite Mantelflächenabschnitt der zweiten Erhebungsgruppe analog zum ersten Mantelflächenabschnitt der ersten Erhebungsgruppe ausgebildet sein. Dies hat den Vorteil, dass die die Erhebungen aufweisende Walze nicht einseitig sondern möglichst gleichmäßig belastet wird, wenn die Erhebungen eine Vergrößerung des Abstands bewirken.

Um die Erzeugung eines Reaktionsmoments zu vermeiden, sind die Erhebungen der ersten Erhebungsgruppe vorzugsweise bezüglich einer Mittelebene senkrecht zur jeweiligen Walzenachse symmetrisch zu den Erhebungen der zweiten Erhebungsgruppe angeordnet.

Vorzugsweise sind auch die Erhebungen der zweiten Erhebungsgruppe in Umfangsrichtung zueinander ausgerichtet und bilden eine zweite Reihe von in Umfangsrichtung hintereinander angeordneten Erhebungen. Die zweite Reihe von Erhebungen ist dann parallel und in axialer Richtung beabstandet zur ersten Reihe von Erhebungen angeordnet.

Auf entsprechende Art und Weise kann die zumindest eine aus Siegelwalze und Gegenwalze, die die erste Erhebungsgruppe aufweist, eine beliebige Anzahl von weiteren Erhebungsgruppen aufweisen, die bevorzugt in weiteren parallelen und in axialer Richtung beabstandeten Reihen angeordnet sind. Dadurch lässt sich die erfindungsgemäße Siegelvorrichtung beliebig an das Format der zu siegelnden Deck- und Formfolie anpassen.

Um über die gesamte Breite des Arbeitsbereichs der Siegelwalze und der Gegenwalze eine definierte und exakte Änderung zwischen dem ersten und dem zweiten Abstand zu bewirken, ist jeder erste Mantelflächenabschnitt in axialer Richtung vorzugsweise zwischen zwei zweiten Mantelflächenabschnitten angeordnet. Die Anzahl zweiter Mantelflächenabschnitte jeder Walze ist somit vorzugsweise um eins größer als die Anzahl erster Mantelflächenabschnitt derselben Walze.

Bevorzugt sind jeweils eine Erhebung der ersten Erhebungsgruppe und eine Erhebung der zweiten Erhebungsgruppe in axialer Richtung zueinander ausgerichtet, sodass die Erhebungen der ersten und der zweiten Erhebungsgruppe in einer Mehrzahl von parallelen, axialen Reihen angeordnet sind, die in Umfangsrichtung versetzt zueinander sind.

In einer bevorzugten Ausführungsform weist die Mantelfläche der Gegenwalze eine Mehrzahl von ersten Mantelflächenstreifen und eine Mehrzahl von zweiten Mantelflächenstreifen auf, die sich jeweils in axialer Richtung vollständig entlang der Mantelfläche der Gegenwalze erstrecken und die sich jeweils in Umfangsrichtung nur über einen Teil der Mantelfläche der Gegenwalze erstrecken, wobei in Umfangsrichtung abwechselnd ein erster und ein zweiter Mantelflächenstreifen angeordnet sind. Jeder erste Mantelflächenstreifen umfasst zumindest eine Ausnehmung und jeder zweite Mantelflächenstreifen umfasst keine Ausnehmung. Zudem umfasst jeder erste Mantelflächenstreifen bevorzugt zumindest eine Erhebung, während vorzugsweise jeder zweite Mantelflächenstreifen keine Erhebung umfasst.

Folglich sind die Mantelfläche der Gegenwalze und die Mantelfläche der Siegelwalze in Umfangsrichtung umlaufende Mantelflächenabschnitte, die axial nebeneinander angeordnet sind, und in axial verlaufende Mantelflächenstreifen, die in Umfangsrichtung nebeneinander angeordnet sind, unterteilt.

Bevorzugt weist auch die Mantelfläche der Siegelwalze eine Mehrzahl von ersten Mantelflächenstreifen und eine Mehrzahl von zweiten Mantelflächenstreifen auf, die sich jeweils in axialer Richtung vollständig entlang der Mantelfläche der Siegelwalze erstrecken und die sich jeweils in Umfangsrichtung nur über einen Teil der Mantelfläche der Siegelwalze erstrecken, wobei in Umfangsrichtung abwechselnd ein erster und ein zweiter Mantelflächenstreifen angeordnet ist. Die ersten Mantelflächenstreifen der Siegelwalze decken sich vorzugsweise im Bereich des Spalts mit den ersten Mantelflächenstreifen der Gegenwalze. Die zweiten Mantelflächenstreifen der Siegelwalze decken sich vorzugsweise im Bereich des Spalts mit den zweiten Mantelflächenstreifen der Gegenwalze.

Weist eine Walze aus Siegelwalze und Gegenwalze eine erste und eine zweite Erhebungsgruppe auf, ist es weiterhin bevorzugt, dass jeder erste Mantelflächenstreifen dieser Walze eine axiale Reihe von Erhebungen umfasst und jeder zweite Mantelflächenstreifen dieser Walze zwischen zwei beabstandeten, axialen Reihen von Erhebungen angeordnet ist.

Vorzugsweise bilden mindestens zwei Ausnehmungen zur Aufnahme der Blisternäpfe in axialer Richtung der Gegenwalze eine Reihe und jeder erste Mantelflächenstreifen umfasst eine axiale Reihe von Ausnehmungen. Die Ausnehmungen einer axialen Reihe von Ausnehmungen können in axialer Richtung zueinander ausgerichtet sein oder relativ zueinander in Umfangsrichtung versetzt sein. Der Versatz ist jedoch nicht größer als die Dimension der Ausnehmungen in Umfangsrichtung, sodass sich die Ausnehmungen einer axialen Reihe in axialer Richtung betrachtet zumindest teilweise überdecken.

In einer bevorzugten Ausführungsform ist folglich jeweils eine axiale Reihe von Erhebungen und eine axiale Reihe von Ausnehmungen in einem ersten Mantelflächenstreifen der Gegenwalze angeordnet, wodurch sichergestellt werden kann, dass der auf die Deckfolie und die Formfolie im Bereich des Spalts bzw. entlang des Siegellinie wirkende Druck im Bereich der Ausnehmungen reduziert wird. Dies ist selbstverständlich auch der Fall, wenn die Siegelwalze in ihren ersten Mantelflächenstreifen jeweils eine axiale Reihe von Erhebungen aufweist und die Siegelwalze und die Gegenwalze derart angesteuert sind, dass ein erster Mantelflächenstreifen der Siegelwalze und ein erster Mantelflächenstreifen der Gegenwalze im Bereich des Spalts zusammenwirken.

Vorzugsweise ist jede Erhebung in einem Schnittbereich zwischen einem zweiten Mantelflächenabschnitt und einem ersten Mantelflächenstreifen angeordnet. Dadurch wird sichergestellt, dass die Erhebungen sich nur auf Bereiche der Formfolie und der Deckfolie auswirken, aus denen keine Blisterpackungen gebildet werden, und zugleich eine zuverlässige Reduzierung des Drucks auf die Folien im Bereich der Ausnehmungen bzw. der Blisternäpfe erfolgt.

In Schnittbereichen zwischen einem zweiten Mantelflächenabschnitt und einem zweiten Mantelflächenstreifen sind keine Erhebungen angeordnet. Auch in Schnittbereichen zwischen einem ersten Mantelflächenabschnitt und einem ersten Mantelflächenstreifen sind keine Erhebungen angeordnet.

Es ist bevorzugt, dass sich jede Erhebung in Umfangsrichtung höchstens so weit erstreckt, wie die zumindest eine Ausnehmung im selben ersten Mantelflächenstreifen. Die Ausnehmungen weisen eine mit den Blisternäpfen in der Formfolie korrespondierende und üblicherweise runde oder elliptische Form auf. Bewegt sich eine Ausnehmung auf den Spalt zwischen der Siegelwalze und der Gegenwalze zu und in diesen hinein, nimmt die Breite des jeweils an der Siegellinie angeordneten Bereichs der Ausnehmung zunächst zu und anschließend wieder ab. An einem voraneilenden Ende und einem nacheilenden Ende der Ausnehmungen kann die effektive Siegellinie daher noch lang genug sein, um ein Durchstechen der Deckfolie zu vermeiden. In einem in Umfangsrichtung der Walze mittleren Bereich jeder Ausnehmung ist die effektive Siegellinie kürzer und es besteht eine erhöhte Gefahr des Durchstechens der Deckfolie. Die zumindest eine Erhebung sollte deshalb in axialer Richtung mit dem mittleren Bereich jeder Ausnehmung fluchtend angeordnet sein. Um die Deckfolie möglichst zuverlässig im Bereich der zweiten Mantelflächenstreifen, in denen keine Ausnehmungen angeordnet sind, an die Formfolie zu Siegeln, erstrecken sich die Erhebungen bevorzugt in Umfangsrichtung nicht weiter als die Ausnehmungen im selben ersten Mantelflächenstreifen.

Eine Höhe jeder Erhebung ist in radialer Richtung der jeweiligen Walze zwischen dem ersten Mantelflächenabschnitt und einer radial nach außen gerichteten Oberseite der Erhebung definiert. Die Höhe der Erhebungen beträgt vorzugsweise zwischen 0,01 und 0,2 mm, bevorzugt zwischen 0,02 und 0,1 mm, mehr bevorzugt zwischen 0,03 und 0,06 mm. Diese Dimensionen haben sich als ausreichend erwiesen, um den Druck entlang der Siegellinie zur Vermeidung von Durchstichen zu reduzieren und zugleich einen ausreichenden Druck zum Siegeln der Bereiche zwischen den Ausnehmungen bereitzustellen.

Vorzugsweise sind alle Erhebungen gleich hoch. Die Erhebungen können aber auch unterschiedlich hoch sein, insbesondere wenn in der Gegenwalze Ausnehmungen unterschiedlicher Geometrien und vor allem unterschiedlicher Breite in axialer Richtung der Walzen ausgebildet sind. Dann sind jedoch zumindest die Erhebungen einer axialen Reihe von Erhebungen gleich hoch.

Durch die Höhe der Erhebungen kann der ausgeübte Siegeldruck in Abhängigkeit von der Länge der effektiven Siegellinie angepasst werden. Eine weitere Möglichkeit einer solchen Anpassung besteht in der Formgebung der Erhebungen.

Grundsätzlich können alle Erhebungen einer Erhebungsgruppe dieselbe Form und dieselben Dimensionen aufweisen. Die Erhebungen einer Erhebungsgruppe können aber auch unterschiedliche Formen und/oder Dimensionen aufweisen, insbesondere wenn die Gegenwalze Ausnehmungen unterschiedlicher Geometrien umfasst und/oder die Ausnehmungen in der Gegenwalze in Umfangsrichtung in unterschiedlichen Abständen angeordnet sind und/oder in axialer Richtung der Gegenwalze unterschiedliche Anzahlen von Ausnehmungen angeordnet sind.

Die Erhebungen können insbesondere auf ihrer in Umfangsrichtung vorauseilenden Seite und auf der nacheilenden Seite im Wesentlichen senkrecht bzw. stufenförmig, schräg oder gekrümmt von der Mantelfläche der jeweiligen Walze radial nach außen verlaufen. Die radial nach außen gerichtete Oberseite jeder Erhebung kann parallel zur Mantelfläche im ersten Mantelflächenabschnitt verlaufen oder eine andere Kontur aufweisen, z.B. linear, gekrümmt, stufen- oder wellenförmig oder mit einem beliebigen Profil ausgebildet sein. In Abhängigkeit von der Form der Erhebungen kann der Abstand zwischen der Siegelwalzenachse und der Gegenwalzenachse dann auch zumindest einem weiteren Abstand entsprechen, der größer als der erste Abstand und ungleich dem zweiten Abstand ist, wenn eine Erhebung im Bereich des Spalts angeordnet ist.

Insbesondere kann die Oberseite jeder Erhebung eine Krümmung mit einem konstanten Radius aufweisen oder eine beliebige andere Krümmung. Z.B kann jede Erhebung im Bereich eines vorauseilenden und eines nacheilenden Endes zumindest einer mit ihr ausgerichteten Ausnehmung eine geringere Steigung aufweisen und in Bereichen zum größten Querschnitt der zumindest einen Ausnehmung in axialer Richtung hin eine größere Steigung aufweisen. Auf diese Art und Weise kann das Druckprofil des Siegeldrucks zwischen Siegel- und Gegenwalze an die Geometrie der Ausnehmungen und somit der Blisternäpfe angepasst werden.

Weiterhin ist es bevorzugt, dass jeweils zwei in Umfangsrichtung benachbarte Erhebungen einer Erhebungsgruppe in Umfangsrichtung den gleichen Abstand aufweisen. Die Erhebungen einer Erhebungsgruppe sind dann gleichmäßig über den Umfang der jeweiligen Walze verteilt und es ergibt sich eine gleichmäßige periodische Bewegung der Siegelwalze und der Gegenwalze relativ zueinander. Die Erhebungen können aber auch in Umfangsrichtung in unterschiedlichen Abständen zueinander angeordnet sein.

Besonders vorteilhaft ist es, wenn der zumindest eine zweite Mantelflächenabschnitt und die darin angeordneten Erhebungen der ersten Erhebungsgruppe mit der Formfolie bzw. der Deckfolie in Kontakt bringbar sind. Dadurch wird sichergestellt, dass Dickenvariationen der Folien automatisch berücksichtigt werden und die die Erhebung aufweisende Walze aus Siegelwalze und Gegenwalze um den Betrag der Höhe der im Bereich des Spalts angeordneten Erhebung relativ zur anderen Walze verschoben wird. Es erfolgt daher auch bei Dickenvariationen der Folien eine ausreichende Reduzierung des Drucks durch die Erhebungen.

Alternativ können die Erhebungen und somit die zweiten Mantelflächenabschnitte auch in einem Bereich angeordnet sein, der in axialer Richtung neben der Deckfolie und der Formfolie ausgebildet ist, sodass die Erhebungen direkt auf die jeweils andere aus Siegelwalze und Gegenwalze treffen. Auch dadurch kann eine geeignete Veränderung des Abstands zwischen der Siegelwalzenachse und der Gegenwalzenachse erreicht werden, allerdings werden Dickenvariationen der Folien nicht berücksichtigt und es kann zu stärkeren Verschleißerscheinungen an den Walzen kommen.

Ein erfindungsgemäßes Verfahren zum Siegeln einer Deckfolie an eine Formfolie, die eine Vielzahl von Blisternäpfen aufweist, mittels einer Siegelvorrichtung, die eine Siegelwalze und eine Gegenwalze umfasst, wobei eine Siegelwalzenachse parallel zu einer Gegenwalzenachse angeordnet ist, sodass zwischen der Siegelwalze und der Gegenwalze ein Spalt gebildet ist, umfasst die Schritte:
Drehen der Siegelwalze und der Gegenwalze und dadurch gemeinsames Führen der Deckfolie und der Formfolie in Kontakt miteinander durch den Spalt;
Siegeln der Deckfolie an die Formfolie im Bereich des Spalts; und
Wiederholtes Verändern eines Abstands zwischen der Siegelwalzenachse und der Gegenwalzenachse zwischen einem ersten und einem zweiten Abstand, der größer als der erste Abstand ist, dadurch, dass zumindest eine aus Siegelwalze und Gegenwalze auf ihrer Mantelfläche eine erste Erhebungsgruppe mit einer Mehrzahl von in Umfangsrichtung zueinander beabstandeten Erhebungen aufweist, die die Gegenwalze und die Siegelwalze relativ zueinander vom ersten Abstand in den zweiten Abstand verschieben, wenn sie in Kontakt mit einer der jeweiligen Walze zugewandten Oberfläche der Formfolie bzw. der Deckfolie kommen.

Dadurch kann der Druck auf die Formfolie und die Deckfolie im Bereich der Siegellinie zwischen der Gegenwalze und der Siegelwalze im Spalt reduziert werden, wie eingangs beschrieben.

Bevorzugt erfolgt das erfindungsgemäße Verfahren mittels einer zuvor beschriebenen erfindungsgemäßen Siegelvorrichtung. Dadurch sind die zur Siegelvorrichtung hinsichtlich ihrer vorteilhaften Ausführungsformen beschriebenen Vorteile auch durch das erfindungsgemäße Verfahren erreichbar.

Vorzugsweise drehen sich die Siegelwalze und die Gegenwalze in entgegengesetzte Richtungen.

Das Siegeln der Deckfolie an die Formfolie im Bereich des Spalts erfolgt vorzugsweise unter Ausübung von Druck und Wärme auf die Deckfolie und die Formfolie. Hierzu ist die Siegelwalze bevorzugt beheizt.

In einer bevorzugten Ausführungsform umfasst das Verfahren weiterhin den Schritt des Zurückbewegens der Gegenwalze und der Siegelwalze relativ zueinander vom zweiten Abstand in den ersten Abstand, wenn keine Erhebung in Kontakt mit einer der jeweiligen Walze zugewandten Oberfläche der Formfolie bzw. der Deckfolie steht. Hierzu kann die Gegenwalze und/oder die Siegelwalze in eine Position vorgespannt sein, in der die Siegelwalzenachse und die Gegenwalzenachse im ersten Abstand zueinander angeordnet sind.

Besonders bevorzugt umfasst das wiederholte Verändern des Abstands zwischen der Siegelwalzenachse und der Gegenwalzenachse:
Verschieben der Gegenwalze und der Siegelwalze relativ zueinander in den zweiten Abstand durch die Erhebungen der ersten Erhebungsgruppe derart, dass die Gegenwalze und die Siegelwalze im zweiten Abstand angeordnet sind, wenn sich in der Formfolie ausgebildete Blisternäpfe im Bereich des Spalts befinden; und
Freigeben der Gegenwalze und der Siegelwalze durch die Erhebungen der ersten Erhebungsgruppe derart, dass sich die Gegenwalze und die Siegelwalze relativ zueinander in den ersten Abstand bewegen und im ersten Abstand angeordnet sind, wenn sich keine in der Formfolie ausgebildeten Blisternäpfe im Bereich des Spalts befinden.

Schließlich ist es bevorzugt, dass die Erhebungen der ersten Erhebungsgruppe die Deckfolie bzw. die Formfolie in einem Abschnitt kontaktieren, aus dem keine Blisterpackungen gebildet werden. Blisterpackungen werden aus der durch das Siegeln der Deckfolie an die Formfolie entstehenden Blisterbahn ausgestanzt, wobei einzelne Blisterpackungen und Abfallabschnitte bzw. ein Ausschuss entstehen. Die Erhebung treten bevorzugt mit Abschnitten der Deckfolie bzw. der Formfolie in Kontakt, die anschließend zu Abfallabschnitten bzw. Ausschuss werden. Dadurch wird verhindert, dass sich durch die Erhebungen entstehende Druckstellen oder Beschädigungen der Formfolie oder der Deckfolie auf die Qualität der herzustellenden Blisterpackungen auswirken.

In der Formfolie sind die Blisternäpfe in wiederkehrenden Mustern ausgebildet, die in Förderrichtung der Formfolie in einer Reihe hintereinander angeordnet sind, wobei jedes Muster von Blisternäpfen den Blisternäpfen einer zu erzeugenden Blisterpackung entspricht. Je nach Dimensionen der Formfolie und der herzustellenden Blisterpackungen können auch mehrere solcher Reihen von Mustern nebeneinander in der Formfolie ausgebildet sein. Die Gegenwalze weist die Ausnehmungen auf, die beim Kontakte der Gegenwalze mit der Formfolie die Blisternäpfe aufnehmen. Entsprechend sind auch die Ausnehmungen in jeweils einem ersten Mantelflächenabschnitt in Ausnehmungsanordnungen angeordnet, wobei jede Ausnehmungsanordnung mit einem Muster der Blisternäpfe korrespondiert und die Ausnehmungsanordnungen in einer Reihe in Umfangsrichtung hintereinander angeordnet sind.

Weitere Vorteile und Merkmale der vorliegenden Erfindung ergeben sich aus der nachfolgenden Beschreibung der beigefügten Figuren.
- Fig. 1a: zeigt eine schematische Querschnittsansicht einer erfindungsgemäßen Siegelvorrichtung, bei der eine Siegelwalzenachse und eine Gegenwalzenachse in einem ersten Abstand zueinander angeordnet sind.
- Fig. 1b: zeigt eine schematische Querschnittsansicht der erfindungsgemäßen Siegelvorrichtung nach Fig. 1a, wobei die Siegelwalzenachse und die Gegenwalzenachse in einem zweiten Abstand zueinander angeordnet sind.
- Fig. 2: zeigt eine Ausführungsform einer Gegenwalze einer erfindungsgemäßen Siegelvorrichtung in einer perspektivischen Ansicht.
- Fig. 3: zeigt eine Detailansicht des Ausschnitts III der in Fig. 2 dargestellten Gegenwalze.

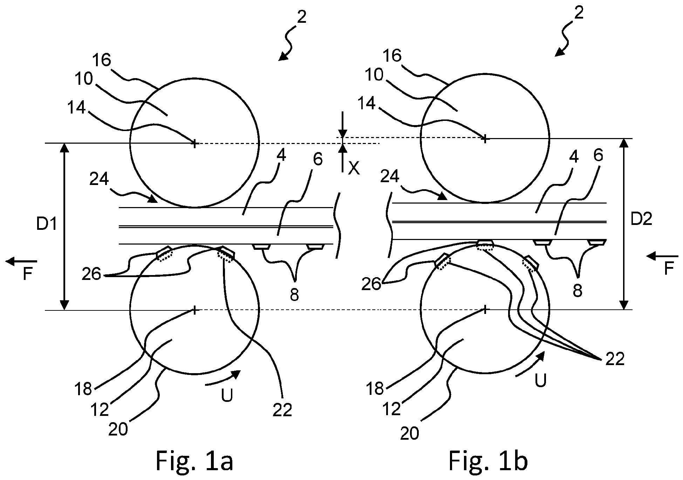

In Fig. 1a und Fig. 1b ist eine erfindungsgemäße Siegelvorrichtung 2 zum Siegeln einer Deckfolie 4 an eine Formfolie 6 in einer Querschnittsansicht schematisch dargestellt. Die Formfolie 6 weist eine Vielzahl von Blisternäpfen 8 auf, die in Förderrichtung F der Folien 4, 6 in wiederkehrenden Blisternapfanordnungen in der Formfolie 6 ausgebildet sind. Jede Blisternapfanordnung der Blisternäpfe 8 entspricht der Anordnung der Blisternäpfe 8 in jeweils einer herzustellenden Blisterpackung.

Die Siegelvorrichtung 2 umfasst eine Siegelwalze 10 und eine Gegenwalze 12, die auch als Vorschubwalze bezeichnet wird. Die Siegelwalze 10 ist um eine Siegelwalzenachse 14 drehbar gelagert und hat eine Mantelfläche 16. Die Gegenwalze 12 ist um eine Gegenwalzenachse 18 drehbar gelagert und weist eine Mantelfläche 20 auf. In der Mantelfläche 20 der Gegenwalze 18 sind Ausnehmungen 22 zur Aufnahme der Blisternäpfe 8 der Formfolie 6 ausgebildet, die in Fig. 1a und 1b durch unterbrochene Linien angedeutet sind. Die Ausnehmungen 22 nehmen die Blisternäpfe 8 der Formfolie 6 auf, während die Formfolie 6 in Kontakt mit der Gegenwalze 12 steht.

Die Siegelwalzenachse 14 und die Gegenwalzenachse 18 sind parallel zueinander ausgerichtet und zueinander beabstandet, sodass zwischen der Siegelwalze 10 und der Gegenwalze 12 ein Spalt 24 gebildet ist, durch den die Deckfolie 4 und die Formfolie 6 zum Siegeln hindurch geführt werden. Im Spalt 24 steht die Siegelwalze 10 in einem linienförmigen Kontakt mit der Deckfolie 4 und die Gegenwalze 12 steht in einem linienförmigen Kontakt mit der Formfolie 6. Diese linienförmigen Kontakte werden auch als Siegellinie bezeichnet. Als eine effektive Siegellinie wird dabei der Teil der Siegellinie bezeichnet, in dem die jeweilige Walze 10, 12 tatsächlich die jeweilige Folie 4, 6 berührt. Im Bereich der Ausnehmungen 22 ist der Kontakt der Gegenwalze 12 zur Formfolie 6 unterbrochen, weshalb die effektive Siegellinie im Bereich der Ausnehmungen 22 kürzer ist als die theoretisch mögliche Siegellinie. Im Spalt 24 wird die Deckfolie 4 durch Ausübung von Kraft und Wärme auf die Formfolie 6 gesiegelt. Die Kraft wird durch die Siegelwalze 10 und die Gegenwalze 12 auf die Folien 4, 6 ausgeübt.

Zumindest eine aus Siegelwalze 10 und Gegenwalze 12 ist in radialer Richtung relativ zur anderen aus Siegelwalze 10 und Gegenwalze 12 verschiebbar gelagert, sodass ein Abstand D zwischen der Siegelwalzenachse 14 und der Gegenwalzenachse 18 variabel ist. Im dargestellten Ausführungsbeispiel ist die Siegelwalze 10 verschiebbar gelagert. Es könnte aber auch die Gegenwalze 12 verschiebbar gelagert sein. In Fig. 1a sind die Siegelwalzenachse 14 und die Gegenwalzenachse 18 in einem ersten Abstand D1 zueinander angeordnet. In Fig. 1b sind die Siegelwalzenachse 14 und die Gegenwalzenachse 18 in einem zweiten Abstand D2 zueinander angeordnet, der größer als der erste Abstand D1 ist. Die Differenz zwischen dem zweiten Abstand D2 und dem ersten Abstand D1 ist zwischen den Fig. 1a und 1b mit X gekennzeichnet.

Des Weiteren weist zumindest eine aus Siegelwalze 10 und Gegenwalze 12 auf ihrer Mantelfläche 16, 20 eine erste Erhebungsgruppe mit einer Mehrzahl von in Umfangsrichtung U zueinander beabstandeten Erhebungen 26 auf. In der dargestellten Ausführungsform weist die Gegenwalze 12 die Erhebungen 26 auf. Zusätzlich oder alternativ können die Erhebungen 26 analog auf der Siegelwalze 10 ausgebildet sein.

Die Erhebungen 26 sind dazu eingerichtet, die Siegelwalze 10 und die Gegenwalze 12 in radialer Richtung relativ zueinander zu verschieben. Der Abstand D zwischen der Siegelwalzenachse 14 und der Gegenwalzenachse 18 entspricht dem ersten Abstand D1, wenn keine Erhebung 26 im Bereich des Spalts 24 angeordnet ist, wie in Fig. 1a dargestellt, und entspricht dem zweiten Abstand D2, wenn zumindest eine Erhebung 26 im Bereich des Spalts 24 angeordnet ist, wie in Fig. 1b dargestellt.

Die Siegelwalze 10, die Gegenwalze 12, die Deckfolie 4, die Formfolie 6, die Blisternäpfe 8 und die Erhebungen 26 sind in Fig. 1a und Fig. 1b nicht maßstäblich abgebildet. Zur besseren Veranschaulichung sind die Größenverhältnisse stark verändert und es ist beispielhaft nur eine geringe Anzahl von Blisternäpfen 8 und Erhebungen 26 dargestellt.

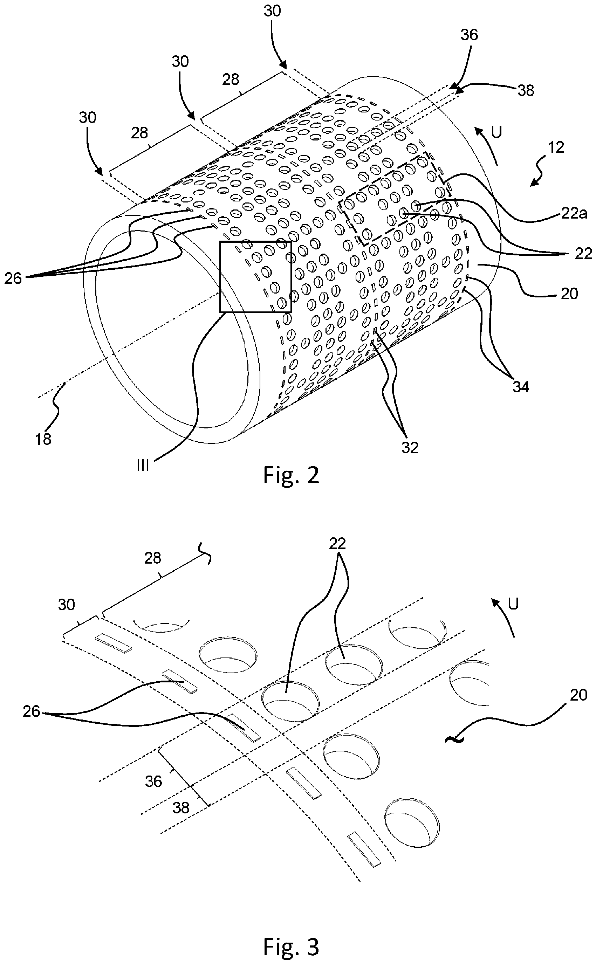

Die Anordnung und Ausbildung der Erhebungen 26 auf der entsprechenden Walze, hier der Gegenwalze 12, wird nachfolgend unter Bezugnahme auf die Fig. 2 und 3 beschrieben.

Zur Beschreibung der Anordnung der Erhebungen 26 werden die Mantelflächen 16, 20 jeweils in Umfangsrichtung U in umlaufende Mantelflächenabschnitte und in axial verlaufende Mantelflächenstreifen unterteilt. Einzelne Mantelflächenabschnitte überlagern bzw. schneiden sich nicht und einzelne Mantelflächenstreifen überlagern bzw. schneiden sich nicht. Ein Mantelflächenstreifen schneidet jedoch alle in der axialen Richtung der jeweiligen Walze 10,12 nebeneinander angeordneten Mantelflächenabschnitte.

Die Mantelflächenabschnitte und die Mantelflächenstreifen lassen sich besonders gut anhand der Ausnehmungen 22 in der Gegenwalze 12 definieren. Entsprechende Mantelflächenabschnitte und Mantelflächenstreifen der Siegelwalze 10 korrespondieren mit den Mantelflächenabschnitten bzw. Mantelflächenstreifen der Gegenwalze 12. D. h., dass sich die jeweils korrespondierenden Mantelflächenabschnitte bzw. Mantelflächenstreifen im Bereich des Spalts 24 im Wesentlichen decken bzw. miteinander fluchten.

Die Mantelfläche 20 der Gegenwalze 12 weist zumindest einen ersten Mantelflächenabschnitt 28 auf, in dem die Ausnehmungen 22 zur Aufnahme der Blisternäpfe 8 der Formfolie 6 ausgebildet sind. Alle Ausnehmungen 22 der Gegenwalze 12 sind in einem ersten Mantelflächenabschnitt 28 angeordnet oder auf mehrere erste Mantelflächenabschnitte 28 verteilt. In der axialen Richtung der Gegenwalze 12 umfasst jeder erste Mantelflächenabschnitt 28 so viele Ausnehmungen 22, wie eine herzustellende Blisterpackung mit entsprechender Blisternapfanordnung. Die Ausnehmungen 22 sind in Ausnehmungsanordnungen 22a angeordnet, von denen eine in Fig. 2 durch ein gestricheltes Rechteck angedeutet ist. Jede Ausnehmungsanordnung 22a entspricht einer Blisternapfanordnung in der Formfolie 6 und somit der Anordnung von Blisternäpfen einer herzustellenden Blisterpackung. In jedem ersten Mantelflächenabschnitt 28 ist eine Mehrzahl solcher Ausnehmungsanordnungen 22 a in Umfangsrichtung U hintereinander angeordnet. Die Definition der Ausnehmungsanordnungen 22a trifft unabhängig von dieser konkreten Ausführungsform auf alle Ausführungsformen der Gegenwalze 12 zu.

Werden aus der Formfolie 6 und der Deckfolie 4 quer zur Förderrichtung F (siehe Fig. 1) und parallel zur axialen Richtung der Walzen 10, 12 mehrere Blisterpackungen nebeneinander hergestellt, umfasst die Gegenwalze 12 eine entsprechende Anzahl von ersten Mantelflächenabschnitt 28 in axialer Richtung. Im dargestellten Ausführungsbeispiel weist die Gegenwalze 12 daher zwei erste Mantelflächenabschnitte 28 auf.

Jeder erste Mantelflächenabschnitt 28 bildet eine Wirkfläche der Gegenwalze 12, die im Spalt 24 die Formfolie 6 zum Siegeln berührt. Um die gewünschte Verringerung des auf die Deckfolie 4 und die Formfolie 6 wirkenden Drucks insbesondere im Bereich der Ausnehmungen 22 zu erreichen, sind die Erhebungen 26 gegenüber dem ersten Mantelflächenabschnitt 28 erhöht. Bei Kontakt einer radial nach außen gerichteten Oberseite der Erhebungen 26 mit einer Unterseite der Formfolie 6 werden die Gegenwalze 12 und die Siegelwalze 10 relativ zueinander in den größeren Abschnitt D2 verschoben (siehe Fig. 1b), wodurch die Deckfolie 4 und die Formfolie 6 im Spalt 24 im Bereich des ersten Mantelflächenabschnitts 28 entlastet wird.

Weiterhin weist die Mantelfläche 20 der Gegenwalze 12 zumindest einen zweiten Mantelflächenabschnitt 30 auf, in dem die Erhebungen 26 der ersten Erhebungsgruppe angeordnet sind. Jeder zweite Mantelflächenabschnitt 30 kann unmittelbar an einen ersten Mantelflächenabschnitt 28 angrenzen, wie in Fig. 3 gut zu erkennen ist. Gegebenenfalls können aber auch noch weitere Mantelflächenabschnitte oder Elemente zwischen einem ersten Mantelflächenabschnitt 28 und einem zweiten Mantelflächenabschnitt 30 angeordnet sein.

Der zweite Mantelflächenabschnitt 30 ist in axialer Richtung neben dem ersten Mantelflächenabschnitt 28 angeordnet. Bevorzugt ist auf beiden Seiten eines ersten Mantelflächenabschnitts 28 jeweils ein zweiter Mantelflächenabschnitt 30 angeordnet. Im zweiten Mantelflächenabschnitt 30 sind keine Ausnehmungen 22 angeordnet. Zudem kontaktiert jeder zweite Mantelflächenabschnitt 30 der Gegenwalze 12 vorzugsweise einen Bereich der Formfolie 6, aus dem keine Blisterpackungen hergestellt werden und der daher auch als Abfallabschnitt bezeichnet wird. Sind, wie dargestellt, mehrere erste Mantelflächenabschnitte 28 vorgesehen, ist vorzugsweise zwischen zwei benachbarten ersten Mantelflächenabschnitten 28 ein zweiter Mantelflächenabschnitt 30 angeordnet.

Bevorzugte weist die Gegenwalze 12 dann auf ihrer Mantelfläche 20 eine zweite Erhebungsgruppe mit einer Mehrzahl von in Umfangsrichtung U zueinander beabstandeten Erhebungen 32 auf, die ebenfalls gegenüber dem zumindest einen ersten Mantelflächenabschnitt 28 erhöht sind und in einem weiteren umlaufenden zweiten Mantelflächenabschnitt 30 angeordnet sind. Analog kann die Gegenwalze 12 auf ihrer Mantelfläche 20 noch eine dritte Erhebungsgruppe mit einer Mehrzahl von in Umfangsrichtung U zueinander beabstandeten Erhebungen 34 und beliebig viele weitere Erhebungsgruppen aufweisen, die jeweils in einem zweiten Mantelflächenabschnitt 30 angeordnet sind.

Jeweils eine Erhebung 26 der ersten Erhebungsgruppe und eine Erhebung 32 der zweiten Erhebungsgruppe (und, falls vorhanden, auch eine Erhebung 34 der dritten Erhebungsgruppe) können in axialer Richtung zueinander ausgerichtet sein, sodass die Erhebungen 26, 32 (und 34) in einer Mehrzahl von parallelen, axialen Reihen angeordnet sind, die in Umfangsrichtung U versetzt zueinander sind.

In Fig. 3 ist eine Grenze zwischen dem ersten Mantelflächenabschnitt 28 und dem zweiten Mantelflächenabschnitt 30 durch eine gestrichelte Linie angedeutet. In der dargestellten bevorzugten Ausführungsform, ist diese Grenze mittig zwischen den Erhebungen 26 und einer Reihe von Ausnehmungen 22 angeordnet, die in Umfangsrichtung verläuft und eine in axialer Richtung äußerste Reihe von Ausnehmungen 22 des ersten Mantelflächenabschnitts 28 bildet. Grundsätzlich kann die Grenze aber auch beliebig zwischen zwei Extrempositionen angeordnet sein. Eine erste Extremposition ist die, in der die angedeutete Grenze tangential zur genannten Reihe von Ausnehmungen 22 auf einer vom ersten Mantelflächenabschnitt 28 nach außen gerichteten Seite in Umfangsrichtung U verläuft. Eine zweite Extremposition ist die, in der die angedeutete Grenze entlang der Erhebungen 26 in Umfangsrichtung U verläuft. Diese Definition der Abgrenzung des ersten und zweiten Mantelflächenabschnitts ist allgemeingültig und auf alle Ausführungsformen übertragbar.

Die Mantelfläche 20 der Gegenwalze 12 weist ferner eine Mehrzahl von ersten Mantelflächenstreifen 36 und eine Mehrzahl von zweiten Mantelflächenstreifen 38 auf, die sich jeweils in axialer Richtung vollständig entlang der Mantelfläche 20 der Gegenwalze 12 erstrecken und die sich jeweils in Umfangsrichtung U nur über einen Teil der Mantelfläche 20 der Gegenwalze 12 erstrecken. In Umfangsrichtung U ist abwechselnd ein erster und ein zweiter Mantelflächenstreifen 36, 38 angeordnet. Jeder erste Mantelflächenstreifen 36 umfasst zumindest eine Ausnehmung 22, während jeder zweite Mantelflächenstreifen 38 keine Ausnehmung 22 umfasst. Zudem umfasst jeder erste Mantelflächenstreifen 36 zumindest eine Erhebung 26. In den zweiten Mantelflächenstreifen 38 sind keine Erhebungen 26 vorgesehen.

Jede axiale Reihe von Erhebungen 26, 32, 34 liegt in einem ersten Mantelflächenstreifen 36. Zudem können jeweils mindestens zwei Ausnehmungen 22 in axialer Richtung eine Reihe bilden und jeder erste Mantelflächenstreifen 36 umfasst dann eine axiale Reihe von Ausnehmungen 22. Die Ausnehmungen 22 einer axialen Reihe von Ausnehmungen 22 können, wie dargestellt, exakt zueinander ausgerichtet sein. Die Ausnehmungen 22 einer axialen Reihe von Ausnehmungen 22 können aber auch, wie eingangs beschrieben, in Umfangsrichtung U geringfügig zueinander versetzt sein.

Jeder erste Mantelflächenstreifen 36 ist definiert zwischen zwei axialen Linien, von denen eine tangential zu einem in Umfangsrichtung U voraneilenden Rand der Ausnehmungen 22 einer axialen Reihe verläuft und die andere tangential zu einem in Umfangsrichtung U nacheilenden Rand der Ausnehmungen 22 derselben axialen Reihe verläuft. Jeder zweite Mantelflächenstreifen 38 ist zwischen zwei in Umfangsrichtung U benachbarten ersten Mantelflächenstreifen 36 angeordnet.

In Fig. 3 ist gut zu erkennen, dass jede Erhebung 26 in einem Schnittbereich zwischen einem zweiten Mantelflächenabschnitt 30 und einem ersten Mantelflächenstreifen 36 angeordnet ist. Dadurch ist sichergestellt, dass die Erhebungen 26 die gewünschte Entlastung im Bereich der Ausnehmungen 22 bewirken und zugleich ein negativer Einfluss auf die Oberfläche der Formfolie 6 im Bereich der herzustellenden Blisterpackungen vermieden wird. Zudem ist ersichtlich, dass sich die Erhebungen 26 in Umfangsrichtung U nicht über die gesamte Länge eines ersten Mantelflächenstreifens 36 erstrecken müssen, sondern dass es ausreichen kann, wenn sie sich nur über einen Teil dieser Distanz und somit über einen Teil der Länge der Ausnehmungen 22 in Umfangsrichtung U erstrecken.

Die Erhebungen 26 der ersten Erhebungsgruppe sind vorzugsweise in Umfangsrichtung U zueinander ausgerichtet und bilden eine erste Reihe von in Umfangsrichtung U hintereinander angeordneten Erhebungen 26. Dies gilt analog für die Erhebungen 32 und 34 der zweiten und der dritten Erhebungsgruppe, die in Umfangsrichtung eine zweite und eine dritte Reihe bilden können.

Die hierin gemachten Ausführungen zu den Erhebungen 26, 32, 34 gelten analog für Ausführungsformen, bei denen die Erhebungen auf der Siegelwalze 10 ausgebildet sind. Dabei ist zu berücksichtigen, dass sich die Unterteilung der Mantelfläche 16 der Siegelwalze 10 mangels Ausnehmungen 22 an der Unterteilung der Gegenwalze 12 orientiert. Die oben beschriebenen Mantelflächenabschnitte und Mantelflächenstreifen sind auf der Gegenwalze 12 zu definieren und entsprechend auf die Siegelwalze 10 zu übertragen, sodass sich die entsprechenden Abschnitte und Streifen im Bereich des Spalts 24 decken bzw. miteinander fluchten, um zusammen auf die Folien einzuwirken.

## Patentansprüche

1. Siegelvorrichtung (2) zum Siegeln einer Deckfolie (4) an eine Formfolie (6), die eine Vielzahl von Blisternäpfen (8) aufweist, wobei die Siegelvorrichtung (2) umfasst:
eine Siegelwalze (10), die um eine Siegelwalzenachse (14) drehbar gelagert ist und eine Mantelfläche (16) hat, die mindestens einen umlaufenden ersten Mantelflächenabschnitt aufweist; und
eine Gegenwalze (12), die um eine Gegenwalzenachse (18) drehbar gelagert ist und eine Mantelfläche (20) hat, die mindestens einen umlaufenden ersten Mantelflächenabschnitt (28) aufweist, in dem Ausnehmungen (22) zur Aufnahme der Blisternäpfe (8) der Formfolie (6) ausgebildet sind, wobei die Gegenwalzenachse (18) parallel zur Siegelwalzenachse (14) angeordnet ist, sodass zwischen der Gegenwalze (12) und der Siegelwalze (10) ein Spalt (24) gebildet ist, durch den die Formfolie (6) und die Deckfolie (4) in Kontakt miteinander hindurchführbar sind;
wobei zumindest eine aus Siegelwalze (10) und Gegenwalze (12) in radialer Richtung relativ zur anderen aus Siegelwalze (10) und Gegenwalze (12) verschiebbar gelagert ist, sodass ein Abstand (D) zwischen der Siegelwalzenachse (14) und der Gegenwalzenachse (18) variabel ist;
**dadurch gekennzeichnet, dass**
zumindest eine aus Siegelwalze (10) und Gegenwalze (12) auf ihrer Mantelfläche (16, 20) eine erste Erhebungsgruppe mit einer Mehrzahl von in Umfangsrichtung (U) zueinander beabstandeten Erhebungen (26) aufweist, die gegenüber dem ersten Mantelflächenabschnitt (28) der jeweiligen Walze (10, 12) erhöht sind, wobei die erste Erhebungsgruppe in einem umlaufenden zweiten Mantelflächenabschnitt (30) der jeweiligen Walze (10, 12) angeordnet ist, der in axialer Richtung neben dem ersten Mantelflächenabschnitt (28) der jeweiligen Walze (10, 12) angeordnet ist; und
der Abstand (D) zwischen der Siegelwalzenachse (14) und der Gegenwalzenachse (18) einem ersten Abstand (D1) entspricht, wenn keine Erhebung (26) im Bereich des Spalts (24) angeordnet ist, und einem zweiten Abstand (D2) entspricht, der größer als der erste Abstand (D1) ist, wenn eine Erhebung (26) im Bereich des Spalts (24) angeordnet ist.

2. Siegelvorrichtung (2) nach Anspruch 1, **dadurch gekennzeichnet, dass** sich der erste Mantelflächenabschnitt der Siegelwalze (10) im Bereich des Spalts (24) mit dem ersten Mantelflächenabschnitt (28) der Gegenwalze (12) im Wesentlichen deckt und dass sich ein zweiter Mantelflächenabschnitt der Siegelwalze (10) im Bereich des Spalts (24) mit dem zweiten Mantelflächenabschnitt (30) der Gegenwalze (12) im Wesentlichen deckt.

3. Siegelvorrichtung (2) nach Anspruch 1 oder 2, **dadurch gekennzeichnet, dass** Erhebungen (26) der ersten Erhebungsgruppe in Umfangsrichtung (U) zueinander ausgerichtet sind und eine erste Reihe von in Umfangsrichtung (U) hintereinander angeordneten Erhebungen (26) bilden.

4. Siegelvorrichtung (2) nach einem der Ansprüche 1 bis 3, **dadurch gekennzeichnet, dass** die zumindest eine aus Siegelwalze (10) und Gegenwalze (12), die die erste Erhebungsgruppe aufweist, auf ihrer Mantelfläche (16, 20) eine zweite Erhebungsgruppe mit einer Mehrzahl von in Umfangsrichtung (U) zueinander beabstandeten Erhebungen (32) aufweist, die gegenüber dem ersten Mantelflächenabschnitt (28) der jeweiligen Walze (10,12) erhöht sind, wobei die zweite Erhebungsgruppe in einem weiteren umlaufenden zweiten Mantelflächenabschnitt (30) der jeweiligen Walze (10, 12) derart angeordnet ist, dass der erste Mantelflächenabschnitt (28) in axialer Richtung zwischen dem zweiten Mantelflächenabschnitt (30) der ersten Erhebungsgruppe und dem zweiten Mantelflächenabschnitt (30) der zweiten Erhebungsgruppe angeordnet ist.

5. Siegelvorrichtung (2) nach Anspruch 4, **dadurch gekennzeichnet, dass** jeweils eine Erhebung (26) der ersten Erhebungsgruppe und eine Erhebung (32) der zweiten Erhebungsgruppe in axialer Richtung zueinander ausgerichtet sind, sodass die Erhebungen (26, 32) der ersten und der zweiten Erhebungsgruppe in einer Mehrzahl von parallelen, axialen Reihen angeordnet sind, die in Umfangsrichtung (U) versetzt zueinander sind.

6. Siegelvorrichtung (2) nach einem der vorangehenden Ansprüche, **dadurch gekennzeichnet, dass** die Mantelfläche (20) der Gegenwalze (12) eine Mehrzahl von ersten Mantelflächenstreifen (36) und eine Mehrzahl von zweiten Mantelflächenstreifen (38) aufweist, die sich jeweils in axialer Richtung vollständig entlang der Mantelfläche (20) der Gegenwalze (12) erstrecken und die sich jeweils in Umfangsrichtung (U) nur über einen Teil der Mantelfläche (20) der Gegenwalze (12) erstrecken, wobei in Umfangsrichtung (U) abwechselnd ein erster und ein zweiter Mantelflächenstreifen (36, 38) angeordnet ist und wobei jeder erste Mantelflächenstreifen (36) zumindest eine Ausnehmung (22) und zumindest eine Erhebung (26) umfasst und jeder zweite Mantelflächenstreifen (38) keine Ausnehmung (22) umfasst.

7. Siegelvorrichtung (2) nach Anspruch 6, **dadurch gekennzeichnet, dass** jeweils mindestens zwei Ausnehmungen (22) in axialer Richtung eine Reihe bilden und jeder erste Mantelflächenstreifen (36) eine axiale Reihe von Ausnehmungen (22) umfasst.

8. Siegelvorrichtung (2) nach Anspruch 6 oder 7, **dadurch gekennzeichnet, dass** jede Erhebung (26) in einem Schnittbereich zwischen einem zweiten Mantelflächenabschnitt (30) und einem ersten Mantelflächenstreifen (36) angeordnet ist.

9. Siegelvorrichtung (2) nach einem der Ansprüche 6 bis 8, **dadurch gekennzeichnet, dass** sich jede Erhebung (26) in Umfangsrichtung (U) höchstens so weit erstreckt, wie die zumindest eine Ausnehmung (22) im selben ersten Mantelflächenstreifen (36).

10. Siegelvorrichtung (2) nach einem der vorangehenden Ansprüche, **dadurch gekennzeichnet, dass** eine Höhe jeder Erhebung (26) in radialer Richtung zwischen dem ersten Mantelflächenabschnitt (28) der jeweiligen Walze (10, 12) und einer radial nach außen gerichteten Oberseite der Erhebung (26) definiert ist, wobei die Höhe zwischen 0,01 und 0,2 mm, bevorzugt zwischen 0,02 und 0,1 mm, mehr bevorzugt zwischen 0,03 und 0,06 mm beträgt.

11. Siegelvorrichtung (2) nach einem der vorangehenden Ansprüche, **dadurch gekennzeichnet, dass** jeweils zwei in Umfangsrichtung (U) benachbarte Erhebungen (26) der ersten Erhebungsgruppe in Umfangsrichtung (U) den gleichen Abstand aufweisen.

12. Siegelvorrichtung (2) nach einem der vorangehenden Ansprüche, **dadurch gekennzeichnet, dass** der zweite Mantelflächenabschnitt (30) und die darin angeordneten Erhebungen (26) der ersten Erhebungsgruppe mit der Formfolie (6) bzw. der Deckfolie (4) in Kontakt bringbar sind.

13. Verfahren zum Siegeln einer Deckfolie (4) an eine Formfolie (6), die eine Vielzahl von Blisternäpfen (8) aufweist, mittels einer Siegelvorrichtung (2), die eine Siegelwalze (10) und eine Gegenwalze (12) umfasst, wobei eine Siegelwalzenachse (14) parallel zu einer Gegenwalzenachse (18) angeordnet ist, sodass zwischen der Siegelwalze (10) und der Gegenwalze (12) ein Spalt (24) gebildet ist, wobei das Verfahren die Schritte umfasst:
Drehen der Siegelwalze (10) und der Gegenwalze (12) und dadurch gemeinsames Führen der Deckfolie (4) und der Formfolie (6) in Kontakt miteinander durch den Spalt (24);
Siegeln der Deckfolie (4) an die Formfolie (6) im Bereich des Spalts (24); und
wiederholtes Verändern eines Abstands (D) zwischen der Siegelwalzenachse (14) und der Gegenwalzenachse (18) zwischen einem ersten und einem zweiten Abstand (D1, D2), der größer als der erste Abstand (D1) ist,
**dadurch gekennzeichnet, dass**
das wiederholte Verändern des Abstands (D) dadurch erfolgt, dass zumindest eine aus Siegelwalze (10) und Gegenwalze (12) auf ihrer Mantelfläche (16, 20) eine erste Erhebungsgruppe mit einer Mehrzahl von in Umfangsrichtung (U) zueinander beabstandeten Erhebungen (26) aufweist, die die Gegenwalze (12) und die Siegelwalze (10) relativ zueinander vom ersten Abstand (D1) in den zweiten Abstand (D2) verschieben, wenn sie in Kontakt mit einer der jeweiligen Walze (10, 12) zugewandten Oberfläche der Formfolie (6) bzw. der Deckfolie (4) kommen.

14. Verfahren nach Anspruch 13, **dadurch gekennzeichnet, dass** das wiederholte Verändern des Abstands (D) umfasst:
Verschieben der Gegenwalze (12) und der Siegelwalze (10) relativ zueinander in den zweiten Abstand (D2) durch die Erhebungen (26) der ersten Erhebungsgruppe derart, dass die Gegenwalze (12) und die Siegelwalze (10) im zweiten Abstand (D2) angeordnet sind, wenn sich in der Formfolie (6) ausgebildete Blisternäpfe (8) im Bereich des Spalts (24) befinden; und
Freigeben der Gegenwalze (12) und der Siegelwalze (10) durch die Erhebungen (26) der ersten Erhebungsgruppe derart, dass sich die Gegenwalze (12) und die Siegelwalze (10) relativ zueinander in den ersten Abstand (D1) bewegen und im ersten Abstand (D1) angeordnet sind, wenn sich keine in der Formfolie (6) ausgebildeten Blisternäpfe (8) im Bereich des Spalts (24) befinden.

15. Verfahren nach Anspruch 13 oder 14, **dadurch gekennzeichnet, dass** die Erhebungen (26) der ersten Erhebungsgruppe die Deckfolie (4) bzw. die Formfolie (6) in einem Abschnitt der Deckfolie (4) bzw. der Formfolie (6) kontaktieren, aus dem keine Blisterpackungen gebildet werden.

## Claims

1. Sealing apparatus (2) for sealing a lidding sheet (4) onto a shaped sheet (6), which has a multiplicity of blister cavities (8), wherein the sealing apparatus (2) comprises:
a sealing roller (10), which is mounted in a rotatable manner about a sealing-roller axis (14) and has a lateral surface (16), which has at least one first encircling lateral-surface portion; and
a mating roller (12), which is mounted in a rotatable manner about a mating-roller axis (18) and has a lateral surface (20), which has at least one first encircling lateral-surface portion (28), in which apertures (22) are formed for the purpose of accommodating the blister cavities (8) of the shaped sheet (6), wherein the mating-roller axis (18) is arranged parallel to the sealing-roller axis (14), and this results in the formation, between the mating roller (12) and the sealing roller (10), of a gap (24), through which the shaped sheet (6) and the lidding sheet (4) can be guided in contact with one another;
wherein at least one of the rollers made up of the sealing roller (10) and mating roller (12) is mounted such that it can be displaced in the radial direction relative to the other one of the rollers made up of the sealing roller (10) and mating roller (12), and this results in a distance (D) between the sealing-roller axis (14) and the mating-roller axis (18) being variable;
**characterized in that**,
on its lateral surface (16, 20), at least one of the rollers made up of the sealing roller (10) and mating roller (12) has a first group of elevations comprising a plurality of elevations (26) which are spaced apart from one another in the circumferential direction (U) and are elevated in relation to the first lateral-surface portion (28) of the respective roller (10, 12), wherein the first group of elevations is arranged in a second encircling lateral-surface portion (30) of the respective roller (10, 12), this second lateral-surface portion being arranged alongside the first lateral-surface portion (28) of the respective roller (10, 12), as seen in the axial direction; and
the distance (D) between the sealing-roller axis (14) and the mating-roller axis (18) corresponds to a first distance (D1) when there is no elevation (26) arranged in the region of the gap (24) and to a second distance (D2), which is greater than the first distance (D1), when an elevation (26) is arranged in the region of the gap (24).

2. Sealing apparatus (2) according to Claim 1, **characterized in that** the first lateral-surface portion of the sealing roller (10) essentially coincides with the first lateral-surface portion (28) of the mating roller (12) in the region of the gap (24), and **in that** a second lateral-surface portion of the sealing roller (10) essentially coincides with the second lateral-surface portion (30) of the mating roller (12) in the region of the gap (24).

3. Sealing apparatus (2) according to Claim 1 or 2, **characterized in that** elevations (26) of the first group of elevations are oriented in the circumferential direction (U) in relation to one another and form a first row of elevations (26) arranged one behind the other in the circumferential direction (U).

4. Sealing apparatus (2) according to one of Claims 1 to 3, **characterized in that**, on its lateral surface (16, 20), that at least one of the rollers made up of the sealing roller (10) and mating roller (12) which has the first group of elevations has a second group of elevations comprising a plurality of elevations (32) which are spaced apart from one another in the circumferential direction (U) and are elevated in relation the first lateral-surface portion (28) of the respective roller (10, 12), wherein the second group of elevations is arranged in a further second encircling lateral-surface portion (30) of the respective roller (10, 12) such that the first lateral-surface portion (28) is arranged between the second lateral-surface portion (30) of the first group of elevations and the second lateral-surface portion (30) of the second group of elevations, as seen in the axial direction.

5. Sealing apparatus (2) according to Claim 4, **characterized in that** in each case one elevation (26) of the first group of elevations and one elevation (32) of the second group of elevations are oriented in the axial direction in relation to one another, and therefore the elevations (26, 32) of the first and second groups of elevations are arranged in a plurality of parallel, axial rows which are offset in relation to one another in the circumferential direction (U).

6. Sealing apparatus (2) according to one of the preceding claims, **characterized in that** the lateral surface (20) of the mating roller (12) has a plurality of first lateral-surface strips (36) and a plurality of second lateral-surface strips (38), which each extend all the way along the lateral surface (20) of the mating roller (12) in the axial direction and which each extend only over part of the lateral surface (20) of the mating roller (12) in the circumferential direction (U), wherein a first and a second lateral-surface strip (36, 38) are arranged alternately in the circumferential direction (U), and wherein each first lateral-surface strip (36) comprises at least one aperture (22) and at least one elevation (26) and each second lateral-surface strip (38) does not comprise any aperture (22).

7. Sealing apparatus (2) according to Claim 6, **characterized in that** in each case at least two apertures (22) form a row in the axial direction and each first lateral-surface strip (36) comprises an axial row of apertures (22).

8. Sealing apparatus (2) according to Claim 6 or 7, **characterized in that** each elevation (26) is arranged in a region of intersection between a second lateral-surface portion (30) and a first lateral-surface strip (36).

9. Sealing apparatus (2) according to one of Claims 6 to 8, **characterized in that** each elevation (26) extends in the circumferential direction (U) at most over the same distance as the at least one aperture (22) in the same first lateral-surface strip (36).

10. Sealing apparatus (2) according to one of the preceding claims, **characterized in that** a height of each elevation (26) is defined between the first lateral-surface portion (28) of the respective roller (10, 12) and a radially outwardly directed upper side of the elevation (26), as seen in the radial direction, wherein the height is between 0.01 and 0.2 mm, preferably between 0.02 and 0.1 mm, more preferably between 0.03 and 0.06 mm.

11. Sealing apparatus (2) according to one of the preceding claims, **characterized in that** in each case two adjacent elevations (26) of the first group of elevations, as seen in the circumferential direction (U), are at the same distance apart in the circumferential direction (U).

12. Sealing apparatus (2) according to one of the preceding claims, **characterized in that** the second lateral-surface portion (30) and the elevations (26) of the first group of elevations arranged therein can be brought into contact with the shaped sheet (6) and/or the lidding sheet (4).

13. Method for sealing a lidding sheet (4) onto a shaped sheet (6), which has a multiplicity of blister cavities (8), by means of a sealing apparatus (2) which comprises a sealing roller (10) and a mating roller (12), wherein a sealing-roller axis (14) is arranged parallel to a mating-roller axis (18), and this results in the formation, between the sealing roller (10) and the mating roller (12), of a gap (24), wherein the method comprises the following steps:
rotation of the sealing roller (10) and of the mating roller (12) and, as a result, joint guidance of the lidding sheet (4) and of the shaped sheet (6) in contact with one another through the gap (24);
sealing of the lidding sheet (4) onto the shaped sheet (6) in the region of the gap (24); and
repeated alteration of a distance (D) between the sealing-roller axis (14) and the mating-roller axis (18) between a first distance (D1) and a second distance (D2), which is greater than the first distance (D1),
**characterized in that**
the repeated alteration of the distance (D) takes place **in that**, on its lateral surface (16, 20), at least one of the rollers made up of the sealing roller (10) and mating roller (12) has a first group of elevations comprising a plurality of elevations (26) which are spaced apart from one another in the circumferential direction (U) and displace the mating roller (12) and the sealing roller (10) relative to one another from the first distance (D1) to the second distance (D2) when they come into contact with a surface of the shaped sheet (6), or of the lidding sheet (4), which is directed towards the respective roller (10, 12).

14. Method according to Claim 13, **characterized in that** the repeated alteration of the distance (D) comprises:
displacement of the mating roller (12) and of the sealing roller (10) relative to one another to the second distance (D2) by the elevations (26) of the first group of elevations such that the mating roller (12) and the sealing roller (10) are arranged at the second distance (D2) when blister cavities (8) formed in the shaped sheet (6) are located in the region of the gap (24); and
release of the mating roller (12) and of the sealing roller (10) by the elevations (26) of the first group of elevations such that the mating roller (12) and the sealing roller (10) move relative to one another to the first distance (D1) and are arranged at the first distance (D1) when blister cavities (8) formed in the shaped sheet (6) are not located in the region of the gap (24).

15. Method according to Claim 13 or 14, **characterized in that** the elevations (26) of the first group of elevations come into contact with the lidding sheet (4), or the shaped sheet (6), in a portion of the lidding sheet (4), or of the shaped sheet (6), from which there are no blister packs formed.

## Revendications

1. Dispositif de scellement (2) pour le scellement d'un film de recouvrement (4) sur un film de forme (6), qui comprend une pluralité de coupelles d'emballagecoque (8), le dispositif de scellement (2) comprenant :
un cylindre de scellement (10), qui est monté de manière rotative autour d'un axe de cylindre de scellement (14) et a une surface d'enveloppe (16), qui comprend au moins une première section de surface d'enveloppe circonférentielle ; et
un contre-cylindre (12), qui est monté de manière rotative autour d'un axe de contre-cylindre (18) et a une surface d'enveloppe (20), qui comprend au moins une première section de surface d'enveloppe circonférentielle (28), dans laquelle sont formés des évidements (22) pour la réception des coupelles d'emballage-coque (8) du film de forme (6), l'axe de contre-cylindre (18) étant agencé parallèlement à l'axe de cylindre de scellement (14), de telle sorte qu'une fente (24) est formée entre le contre-cylindre (12) et le cylindre de scellement (10), à travers laquelle le film de forme (6) et le film de recouvrement (4) peuvent être passés en contact l'un avec l'autre ;
au moins un parmi le cylindre de scellement (10) et le contre-cylindre (12) étant monté de manière déplaçable dans la direction radiale par rapport à l'autre parmi le cylindre de scellement (10) et le contre-cylindre (12), de telle sorte qu'une distance (D) entre l'axe de cylindre de scellement (14) et l'axe de contre-cylindre (18) est variable ;
**caractérisé en ce que**
au moins un parmi le cylindre de scellement (10) et le contre-cylindre (12) comprend sur sa surface d'enveloppe (16, 20) un premier groupe de surélévations contenant une pluralité de surélévations (26) espacées les unes des autres dans la direction circonférentielle (U), qui sont surélevées par rapport à la première section de surface d'enveloppe (28) du cylindre respectif (10, 12), le premier groupe de surélévations étant agencé dans une deuxième section de surface d'enveloppe circonférentielle (30) du cylindre respectif (10, 12), qui est agencée dans la direction axiale à côté de la première section de surface d'enveloppe (28) du cylindre respectif (10, 12) ; et
la distance (D) entre l'axe de cylindre de scellement (14) et l'axe de contre-cylindre (18) correspond à une première distance (D1) lorsqu'aucune surélévation (26) n'est agencée dans la zone de la fente (24), et correspond à une deuxième distance (D2), qui est supérieure à la première distance (D1), lorsqu'une surélévation (26) est agencée dans la zone de la fente (24) .

2. Dispositif de scellement (2) selon la revendication 1, **caractérisé en ce que** la première section de surface d'enveloppe du cylindre de scellement (10) coïncide essentiellement avec la première section de surface d'enveloppe (28) du contre-cylindre (12) dans la zone de la fente (24), et **en ce qu'**une deuxième section de surface d'enveloppe du cylindre de scellement (10) coïncide essentiellement avec la deuxième section de surface d'enveloppe (30) du contre-cylindre (12) dans la zone de la fente (24).

3. Dispositif de scellement (2) selon la revendication 1 ou 2, **caractérisé en ce que** les surélévations (26) du premier groupe de surélévations sont orientées les unes vers les autres dans la direction circonférentielle (U) et forment une première série de surélévations (26) agencées les unes après les autres dans la direction circonférentielle (U).

4. Dispositif de scellement (2) selon l'une quelconque des revendications 1 à 3, **caractérisé en ce que** l'au moins un parmi le cylindre de scellement (10) et le contre-cylindre (12) qui comprend le premier groupe de surélévations comprend sur sa surface d'enveloppe (16, 20) un deuxième groupe de surélévations contenant une pluralité de surélévations (32) espacées les unes des autres dans la direction circonférentielle (U), qui sont surélevées par rapport à la première section de surface d'enveloppe (28) du cylindre respectif (10, 12), le deuxième groupe de surélévations étant agencé dans une deuxième section de surface d'enveloppe circonférentielle supplémentaire (30) du cylindre respectif (10, 12), de telle sorte que la première section de surface d'enveloppe (28) est agencée dans la direction axiale entre la deuxième section de surface d'enveloppe (30) du premier groupe de surélévations et la deuxième section de surface d'enveloppe (30) du deuxième groupe de surélévations.

5. Dispositif de scellement (2) selon la revendication 4, **caractérisé en ce qu'**une surélévation (26) du premier groupe de surélévations et une surélévation (32) du deuxième groupe de surélévations sont respectivement orientées l'une vers l'autre dans la direction axiale, de telle sorte que les surélévations (26, 32) du premier et du deuxième groupe de surélévations sont agencées en une pluralité de rangées axiales parallèles, qui sont décalées les unes par rapport aux autres dans la direction circonférentielle (U).

6. Dispositif de scellement (2) selon l'une quelconque des revendications précédentes, **caractérisé en ce que** la surface d'enveloppe (20) du contre-cylindre (12) comprend une pluralité de premières bandes de surface d'enveloppe (36) et une pluralité de deuxièmes bandes de surface d'enveloppe (38), qui s'étendent respectivement dans la direction axiale entièrement le long de la surface d'enveloppe (20) du contre-cylindre (12) et qui ne s'étendent respectivement dans la direction circonférentielle (U) que sur une partie de la surface d'enveloppe (20) du contre-cylindre (12), une première et une deuxième bande de surface d'enveloppe (36, 38) étant agencées en alternance dans la direction circonférentielle (U), et chaque première bande de surface d'enveloppe (36) comprenant au moins un évidement (22) et au moins une surélévation (26), et chaque deuxième bande de surface d'enveloppe (38) ne comprenant pas d'évidement (22).

7. Dispositif de scellement (2) selon la revendication 6, **caractérisé en ce qu'**au moins deux évidements (22) dans la direction axiale forment respectivement une rangée et chaque première bande de surface d'enveloppe (36) comprend une rangée axiale d'évidements (22).

8. Dispositif de scellement (2) selon la revendication 6 ou 7, **caractérisé en ce que** chaque surélévation (26) est agencée dans une zone d'intersection entre une deuxième section de surface d'enveloppe (30) et une première bande de surface d'enveloppe (36).

9. Dispositif de scellement (2) selon l'une quelconque des revendications 6 à 8, **caractérisé en ce que** chaque surélévation (26) s'étend dans la direction circonférentielle (U) au plus autant que l'au moins un évidement (22) dans la même première bande de surface d'enveloppe (36).

10. Dispositif de scellement (2) selon l'une quelconque des revendications précédentes, **caractérisé en ce qu'**une hauteur de chaque surélévation (26) dans la direction radiale est définie entre la première section de surface d'enveloppe (28) du cylindre respectif (10, 12) et un côté supérieur de la surélévation (26) orienté radialement vers l'extérieur, la hauteur étant entre 0,01 et 0,2 mm, de préférence entre 0,02 et 0,1 mm, de manière davantage préférée entre 0,03 et 0,06 mm.

11. Dispositif de scellement (2) selon l'une quelconque des revendications précédentes, **caractérisé en ce que** deux surélévations (26) voisines dans la direction circonférentielle (U) du premier groupe de surélévations présentent respectivement la même distance dans la direction circonférentielle (U).

12. Dispositif de scellement (2) selon l'une quelconque des revendications précédentes, **caractérisé en ce que** la deuxième section de surface d'enveloppe (30) et les surélévations (26) du premier groupe de surélévations agencées dans celle-ci peuvent être mises en contact avec le film de forme (6) ou le film de recouvrement (4).

13. Procédé de scellement d'un film de recouvrement (4) sur un film de forme (6), qui comprend une pluralité de coupelles d'emballage-coque (8), au moyen d'un dispositif de scellement (2), qui comprend un cylindre de scellement (10) et un contre-cylindre (12), un axe de cylindre de scellement (14) étant agencé parallèlement à un axe de contre-cylindre (18), de telle sorte qu'une fente (24) est formée entre le cylindre de scellement (10) et le contre-cylindre (12), le procédé comprenant les étapes suivantes :
la rotation du cylindre de scellement (10) et du contre-cylindre (12) et ainsi l'acheminement conjoint du film de recouvrement (4) et du film de forme (6) en contact l'un avec l'autre à travers la fente (24) ;
le scellement du film de recouvrement (4) sur le film de forme (6) dans la zone de la fente (24) ; et
la modification répétée d'une distance (D) entre l'axe de cylindre de scellement (14) et l'axe de contre-cylindre (18) entre une première et une deuxième distance (D1, D2), qui est supérieure à la première distance (D1),
**caractérisé en ce que**
la modification répétée de la distance (D) a lieu **en ce qu'**au moins un parmi le cylindre de scellement (10) et le contre-cylindre (12) comprend sur sa surface d'enveloppe (16, 20) un premier groupe de surélévations contenant une pluralité de surélévations (26) espacées les unes des autres dans la direction circonférentielle (U), qui déplacent le contre-cylindre (12) et le cylindre de scellement (10) l'un par rapport à l'autre de la première distance (D1) à la deuxième distance (D2) lorsqu'elles viennent en contact avec une surface du film de forme (6) ou du film de recouvrement (4) tournée vers le cylindre respectif (10, 12).

14. Procédé selon la revendication 13, **caractérisé en ce que** la modification répétée de la distance (D) comprend :
le déplacement du contre-cylindre (12) et du cylindre de scellement (10) l'un par rapport à l'autre à la deuxième distance (D2) par les surélévations (26) du premier groupe de surélévations, de telle sorte que le contre-cylindre (12) et le cylindre de scellement (10) sont agencés à la deuxième distance (D2) lorsque des coupelles d'emballage-coque (8) formées dans le film de forme (6) se trouvent dans la zone de la fente (24) ; et
le relâchement du contre-cylindre (12) et du cylindre de scellement (10) par les surélévations (26) du premier groupe de surélévations, de telle sorte que le contre-cylindre (12) et le cylindre de scellement (10) se déplacent l'un par rapport à l'autre à la première distance (D1) et sont agencés à la première distance (D1) lorsque des coupelles d'emballage-coque (8) formées dans le film de forme (6) ne se trouvent pas dans la zone de la fente (24).

15. Procédé selon la revendication 13 ou 14, **caractérisé en ce que** les surélévations (26) du premier groupe de surélévations viennent en contact avec le film de recouvrement (4) ou le film de forme (6) dans une section du film de recouvrement (4) ou du film de forme (6) à partir de laquelle des emballages-coques ne sont pas formés.
